# EUROPEAN PATENT APPLICATION

(11) **EP 2 783 607 A1**
(43) Date of publication of application: **01.10.2014**
(21) Application number: 12851642.4
(22) Date of filing: 19.11.2012
(51) Int. Cl.: A47J 19/06, A47J 43/07

(54) **JUICER**

(30) Priority: 25.11.2011 KR 20110124363
(71) Applicant: Bae, Jeong-Yong, Uiwang-si, Gyeonggi-do 437-765 (KR)
(72) Inventor: Bae, Jeong-Yong, Uiwang-si, Gyeonggi-do 437-765 (KR)
(74) Representative: Chaillot, Geneviève
(86) International application number: PCT/KR2012/009793
(87) International publication number: WO 2013/077606

(57) **Abstract**

A juice extractor is disclosed. The juice extractor of the present invention includes a filter net which has a plurality of holes that are used to prevent residues of squeezed food from passing therethrough and allow juice of the squeezed food to pass therethrough formed thereon, and cutting blades which adhere to one or more lateral portions of the filter net to cut the food residues stuck in a plurality of the holes. According to the present invention, a user easily cleans the filter net after using the juice extractor.

## Description

### Technical Field

The present invention relates to a juice extractor, more specifically wherein cleaning is easily performed by a user after used.

### Background Art

Many busy people in modern times use juice extractors for squeezing fruits, vegetables, etc. to drink juice of the squeezed food.

The conventional juice extractors must be provided with iron filter nets with a plurality of holes so that the juice of food squeezed by a squeezer pass through the filter nets, while the food residues are left.

However, the food residues are naturally stuck in a plurality of the holes formed on these filter nets while the juice pass through the nets, and users have inconvenience in cleaning a plurality of the holes in which the food residues, especially fiber residues, are stuck after using the juice extractors.

### Disclosure

### Technical Problem

Accordingly, an objective of the present invention is to provide a juice extractor wherein cleaning is easily performed by a user after used.

### Technical Solution

The objective of the present invention is achieved by a juice extractor including a filter net which has a plurality of holes that are used to prevent residues of squeezed food from passing therethrough and allow juice of the squeezed food to pass therethrough formed thereon, and cutting blades which adhere to one or more lateral portions of the filter net to cut the food residues stuck in a plurality of the holes.

Preferably, the juice extractor is characterized in that the filter net and the cutting blades rotate in the opposite direction to each other in a state in which the cutting blades adhere to lateral portions of the filter net.

In addition, the juice extractor further includes spray orifices for spraying water to a plurality of the holes when the food residues stuck in a plurality of the holes are cut by the cutting blades.

Besides, the juice extractor is characterized in that the cutting blades are mounted on the side of an external frame mounted outside the filter net, and the external frame has drive sawteeth, which are used to allow the external frame to rotate in the direction opposite to the filter net, formed on the bottom thereof.

### Advantageous Effects

According to the present invention, a user may easily clean the filter net after using the juice extractor.

### Description of Drawings

FIG. 1 illustrates a structure of a squeezing basket of a juice extractor according to one embodiment of the present invention.
FIG. 2 illustrates a case in which food residues are stuck in a filter net provided to the squeezing basket of the juice extractor according to one embodiment of the present invention.
FIG. 3 illustrates a structure of an external frame according to one embodiment of the present invention.
FIG. 4 illustrates a state in which the squeezing basket is coupled to the external frame according to one embodiment of the present invention.
FIGS. 5 through 7 illustrate a process of removing the food residues stuck in the filter net provided to the squeezing basket of the juice extractor according to one embodiment of the present invention.
FIG. 8 illustrates an example of a state in which guide portions are provided to one of cutting blades of the juice extractor according to the present invention.
FIG. 9 illustrates another embodiment of the guide portions.

### Mode for Invention

Hereinafter, embodiments of the present invention are described in detail with reference to the accompanying drawings. It is to be noted that like reference numerals refer to similar elements throughout the drawings. In addition, redundant and detailed descriptions of known functions and elements that may unnecessarily make the gist of the present invention obscure are omitted.

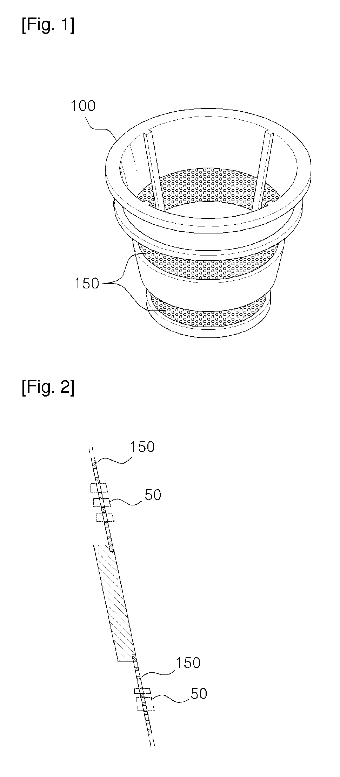

FIG. 1 illustrates a structure of a squeezing basket of a juice extractor according to one embodiment of the present invention.

As shown in FIG. 1, a squeezing basket 100 has a filter net 150 provided to the lateral surface thereof, wherein the filter net 150 has a plurality of holes which allow juice of squeezed food, such as persimmons, apples, pears, tomatoes, kale, etc., to pass through the holes, formed on the filter net, and a plurality of the holes are used to prevent pulp residues 50 of the squeezed food from passing therethrough.

However, some of the pulp residues 50 that have a diameter equal to or larger than that of the hole, such as fruit residues 50, may be stuck in the holes, as shown in FIG. 2.

Because both ends of the pulp residues 50 stuck in the holes as shown in FIG. 2 protrude from the holes to the inside and outside of the filter net 150, respectively, the pulp residues 50 stuck in the holes of the filter net 150 are not easily removed although a user scours the filter net using a scour pad or sprays high pressure water to the filter net when cleaning the filter net 150.

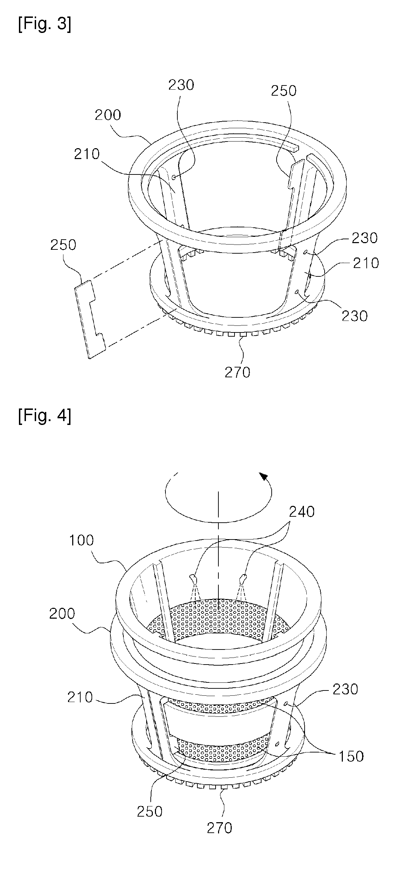

Accordingly, the present invention provides an external frame 200 for facilitating cleaning the filter net 150, as shown in FIG. 3. The external frame 200 in FIG. 3 has a space for allowing the squeezing basket 100 in FIG. 1 to be inserted thereinto as shown in FIG. 4, wherein the external frame includes lateral frames 210, cutting blades 250, drive sawteeth 270, first spray orifices 230, and second spray orifices 240.

Specifically, as shown in FIG. 3, the cutting blades 250 are inserted into the lateral frames 210 of the external frame 200, and a user adjusts the degree by which the cutting blades 250 are inserted into the lateral frame, so that the squeezing basket 100 in FIG. 1 adheres to or is spaced from the exterior of the filter net 150.

That is, when squeezing food in the squeezing basket 100, the user moves the cutting blades 250 to be spaced from the exterior of the filter net 150.

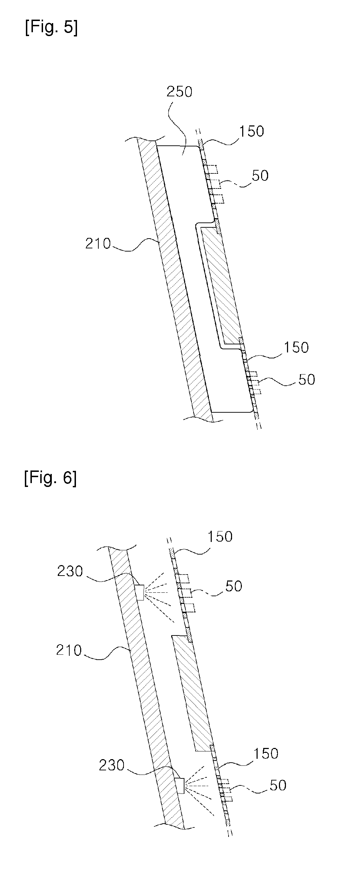

On the other hand, when cleaning the filter net 150 after food are squeezed and juice are extracted, the user pushes a wash button on the juice extractor (automatic method) or manually moves the cutting blades (manual method) in a state in which the squeezing basket 100 is inserted into the external frame 200 as shown in FIG. 4. And then the cutting blades 250 are moved to the exterior of the filter net 150 to adhere to the exterior of the filter net 150, as shown in FIG. 5.

After that, the juice extractor of the present invention uses an external power source to allow the squeezing basket 100 to rotate in a state in which the external frame 200 is fixed, or to allow the external frame 200 to rotate in a state in which the squeezing basket 100 is fixed, and thus the cutting blades 250 cut the pulp residues 50 protruding from the holes of the filter net 150 in the same manner as shaving beards or cutting an object with scissors.

This is because the cutting blades 250 are made unsharp so that the user's fingers are prevented from being cut by the cutting blades 250 when the user assembles and disassembles the juice extractor of the present invention, while at the same time sufficiently cutting food residues.

Furthermore, the external frame 200 is rotated by a drive motor of the main body in a state in which drive sawteeth 270 formed on the bottom of the external frame 200 engage with other sawteeth of a main body (not shown) of the juice extractor, and thus the cutting blades 250 formed on the lateral surface of the external frame 200 cut the pulp residues 50 protruding from the filter net.

Besides, to carry out the present invention, the cutting blades 250 may be made out of a reinforced plastic material with sharply-processed edges, thereby minimizing noises caused by friction while in cutting, or a metallic material, such as a razor blade, to maximize cutting effects in spite of noise.

However, when the present invention is carried out, the cutting blades 250 are spaced from the filter net to a fine degree or slightly curved in such a manner that certain portions thereof come into contact with the filter net so that noise or wear is reduced.

Accordingly, a portion of the pulp residues 50 protruding from the holes of the filter net 150 is cut as shown in FIG. 6, and the rest of the pulp residues 50 is easily removed from the holes of the filter net 150.

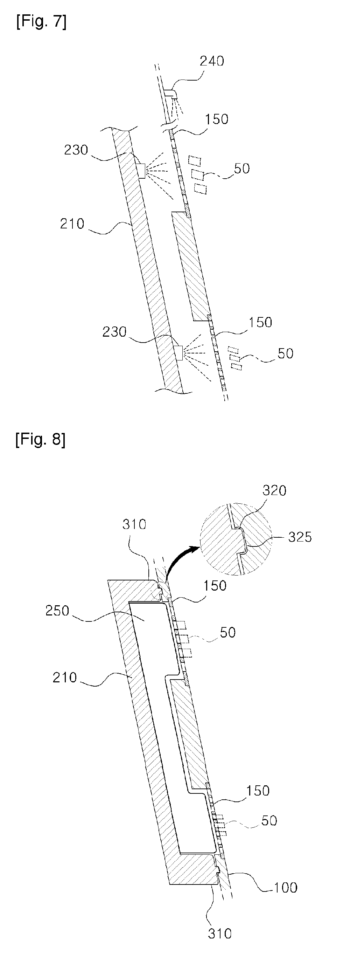

Here, as shown in FIG. 7, spray nozzles provided to the one or more lateral frames 210 of the external frame 200, that is first spray orifices 230 automatically spray or are manually operated to spray water to the external surface of the filter net 150, and second spray orifices 240 formed on the upper portion of the external frame 210 spray water to the inside of the filter net 150 in a direction from top to bottom to sweep and remove the residues from the filter net.

Specifically, the first orifices 230 spray water to the filter net 150 in a direction from the cut portion of the pulp residues to the uncut portion thereof, that is, vertically against the filter net 150, thereby removing the uncut pulp residues.

Furthermore, the second spray orifices 240 spray water to the uncut portion of the residues in a direction along the surface of the filter net 150, wherein, as shown in FIG. 7, the second spray orifices 240 causes the pulp residues removed from the holes by water sprayed from the first spray orifices 230 and sticking to the surface of the filter net to be washed downwardly.

Besides, to carry out the present invention, it is preferable that, after the juice are extracted in the juice extractor, an outlet for discharging juice from the juice extractor is automatically or manually blocked so that water sprayed through the first and second spray orifices 230 and 240 is prevented from leaking outside the juice extractor.

And thus, the pulp residues 50 stuck in the holes of the filter net 150 are completely removed, and it is preferable that water mixed with the removed pulp residues 50 in the squeezing basket 100 is discharged outside through a discharging outlet (not shown) formed on the bottom of the external frame 200 because of turbulence caused by the rotation of the external frame 200 through the drive motor.

Besides, it is to be understood that the juice extractor according to the present invention includes various types of juice extraction products, and a technical principle in which cutting blades are used to clean a filter net may be widely applied to cleaning a wastewater filter.

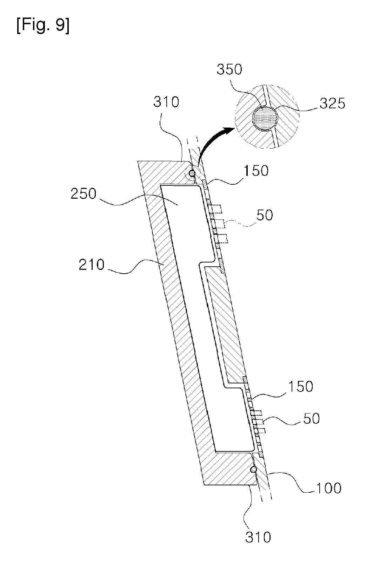

FIG. 8 illustrates an example of a state in which guide portions are provided to one of the cutting blades of the juice extractor according to the present invention, and FIG. 9 illustrates another embodiment of the guide portions.

The juice extractor according to the present invention may further have guide portions, which are used to allow the cutting blades 250 to be coupled to the filter net 150 in a distanced manner, provided between the cutting blades 250 and the squeezing basket 100 with the filter net 150. When the cutting blades 250 are inserted into and mounted on the lateral frames 210, the guide portions allow edges of the blades and the filter net 150 to be spaced from each other to a fine degree rather than to completely adhere to each other, and a variety of known methods may be adopted to implement the guide portions.

The filter net 150 may be slightly modified at the time of manufacture or while used, or have a joint (not shown). Accordingly, when the cutting blades 250 rotates in the direction opposite to the filter net 150 in a state in which the cutting blades and the filter net completely adhere to each other, noise or fine debris may be caused. Thus, it is preferable that the cutting blades 250 and the filter net 150 are coupled to each other in a slightly-distanced manner so that the cutting blades 250 are operated under condition that the cutting blades and the filter net 150 are spaced from each other at a minimum distance.

According to an example, the guide portions may be provided in a form of guide projections 320, as shown in FIG. 8. Referring to FIG. 8, the guide portions 310 are provided above and below the cutting blades 250, respectively, and the guide projections 320 may be provided to the front of the guide portions 310. Here, the squeezing basket 100 may have guide grooves 325 into which the guide projections 320 are inserted formed at positions corresponding to the guide projections 320. Accordingly, when the cutting blades 250 adhere to the filter net 150, the guide projections 320 are inserted into the guide grooves 325, so as to slidingly move along the guide grooves 325.

Furthermore, according to another embodiment, the guide portions 310 may be provided in a form of guide balls 350, as shown in FIG. 9. The guide balls 350 are rotatably provided above and below the cutting blades 250, respectively so as to reduce friction caused when the external frame rotates. The squeezing basket 100 may have the guide grooves 325 into which the guide balls 350 are inserted formed at positions corresponding to the guide balls 350.

Besides, the guide portions may be provided to the middle portion where the cutting blades 250 do not come into contact with the filter net 150. And the guide projections 320 or the guide balls 350 may be provided in the position of the guide groove, if necessary. Specifically, the guide projections 320 may be provided to the exterior of the squeezing basket 100, and the guide grooves may be provided to the middle portion or above and below the cutting blades 150 to correspond to the guide projections 320. That is, a variety of known methods are applicable to the guide portions of the juice extractor according to the present invention under condition that the cutting blades 250 are configured to be provided to positions coming in contact with the squeezing basket 100 as well as to be spaced from the filter net 150 in a predetermined distance.

It is apparent that although the preferred embodiments and examples of the present invention in the foregoing description are illustratively described, the present invention is not limited to the above-mentioned specific embodiments and examples, and various modifications will be made to those skilled in the art without departing from the gist of the present invention defined by the appended claims and these modifications must be understood within the scope of the technical ideas of the present invention.

In addition, the terminology used herein is for the purpose of describing particular embodiments only and is not intended to be limiting of the present disclosure. As used herein, the singular forms "a", "an", and "the" are intended to include the plural forms as well, unless the context clearly indicates otherwise. It is to be understood that the terms "comprise(s)" and/or "comprising", or "include(s)" and/or "including" when used in this specification, specify the presence of stated features, integers, steps, operations, elements, components, and/or groups thereof, but do not preclude the presence or addition of one or more other features, integers, steps, operations, elements, components, and/or groups thereof.

## Claims

1. Juice extractor, comprising:
a filter net which has a plurality of holes that are used to prevent residues of squeezed food from passing therethrough and allow juice of the squeezed food to pass therethrough formed thereon; and
cutting blades which adhere to one or more lateral portions of the filter net to cut food residues stuck in a plurality of the holes.

2. Juice extractor according to claim 1, wherein the filter net and the cutting blades rotate in the opposite direction to each other in a state in which the cutting blades adhere to lateral portions of the filter net.

3. Juice extractor according to claim 1, wherein the juice extractor further comprises spray orifices for spraying water to a plurality of the holes when the food residues stuck in a plurality of the holes are cut by the cutting blades.

4. Juice extractor according to claim 1, wherein the cutting blades are mounted on the side of an external frame mounted outside the filter net, and the external frame has drive sawteeth, which are used to allow the external frame to rotate in the direction opposite to the filter net, formed on the bottom thereof.

5. Juice extractor according to claim 1, wherein the juice extractor further comprises guide portions which are used to allow the cutting blades to be coupled to the filter net in a distanced manner between the cutting blades and the squeezing basket with the filter net.
